## Europäisches Patentamt

## European Patent Office
## Office européen des brevets

(11) Veröffentlichungsnummer: **0 291 803**
**A2**

(12) **EUROPÄISCHE PATENTANMELDUNG**

(21) Anmeldenummer: 88107400.9

(22) Anmeldetag: 07.05.88

(51) Int. Cl.⁴: **H02P 7/00**

(30) Priorität: 30.05.87 DE 3718309
21.05.87 DE 3716995

(43) Veröffentlichungstag der Anmeldung:
**23.11.88 Patentblatt 88/47**

(84) Benannte Vertragsstaaten:
**DE FR IT SE**

(71) Anmelder: **VDO Adolf Schindling AG**
**Gräfstrasse 103**
**D-6000 Frankfurt/Main(DE)**

(72) Erfinder: **Röttger, Michael**
**Glaskopfweg 5a**
**D-6246 Glashütten(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Schaltungsanordnung zur getakteten Ansteuerung von Halbleiterschaltern.**

(57) In einer Schaltungsanordnung zur getakteten Ansteuerung von Halbleiterschaltern (1-4), zu denen je eine Freilaufdiode (D1-D4) parallel liegt und die in Zweigen einer Brücke angeordnet sind, soll eine in der Diagonalen der Brücke liegende ohmsch-induktive Last (5) mit geringer Verlustleistung mit einem gesteuerten Strommittelwert beaufschlagt werden. Dazu werden in einer Bestromungsphase zwei in der Brücke diagonal gegenüber liegende Halbleiterschalter (z.B. 1, 4) eingeschaltet, während in der darauffolgenden Freilaufphase ein Freilaufstrom durch die Last fließt. Zum Herabsetzen der Verlustleistung wird zu Beginn der Freilaufphase nur einer (1) der beiden diagonal gegenüber liegenden Halbleiterschalter (1, 4) geöffnet und anschließend ein in der Brücke neben dem leitenden Halbleiterschalter (4) liegender Halbleiterschalter (3) eingeschaltet. Vor Beginn einer sich daran anschließenden Bestromungsphase wird der in der Brücke neben dem leitenden Halbleiterschalter (4) liegende Halbleiterschalter (3) geöffnet, bevor der geöffnete Halbleiterschalter (1) der beiden diagonal gegenüber liegenden Halbleiterschalter (1, 4) wieder geschlossen wird.

FIG.1

EP 0 291 803 A2

## Schaltungsanordnung zur getakteten Ansteuerung von Halbleiterschaltern.

Die Erfindung betrifft eine Schaltungsanordnung zur getakteten Ansteuerung von Halbleiterschaltern nach dem Oberbegriff des Anspruchs 1.

Bei bekannten Schaltungsanordnungen der eingangs genannten Gattung erfolgt die Ansteuerung von je zwei diagonal in der Brücke gegenüberliegenden Halbleiterschaltern in dem gleichen Sinne mit einem Ansteuersignal, so daß beide Halbleiterschalter gleichzeitig zu Beginn einer Bestromungsphase eingeschaltet werden, so daß in dieser Phase der Betrag des Stroms in der Last ansteigt, und in einer darauffolgenden Freilaufphase gleichzeitig in den nichtleitenden Zustand versetzt werden. Während der Freilaufphase sinkt der Strom in der Last ab und fließt über Freilaufdioden zurück in eine die Schaltungsanordnung speisende Spannungsquelle, z.B. eine Autobatterie. - Der mittlere Strom, der sich in der Last, d.h. dem Verbraucher einstellt, ergibt sich dabei aus dem Tastverhältnis der angesteuerten Halbleiterschalter, d.h. der Einschaltzeit zur Ausschaltzeit, der Zeitkonstanten der ohmsch-induktiven Last sowie anderen Lastparametern. Je nach dem, welches Paar der in der Brücke diagonal gegenüber liegenden Halbleiterschalter getaktet angesteuert wird, während das jeweils andere Paar Halbleiterschalter gesperrt ist, fließt der Strom in der Last in positiv oder negativ gezählter Richtung. - In dieser bekannten Schaltungsanordnung leiten also die Freilaufdioden den gesamten in der Freilaufphase durch die Last fließenden Strom (Freilaufstrom). Der Freilaufstrom erzeugt jedoch in den Freilaufdioden einen verhältnismäßig großen Spannungsabfall und somit eine hohe Verlustleistung.

Der vorliegenden Erfindung liegt daher die Aufgabe zugrunde, eine Schaltungsanordnung der eingangs genannten Gattung so weiterzubilden, daß die Verlustleistung herabgesetzt wird.

Diese Aufgabe wird durch die Ausbildung der Schaltungsanordnung mit den in dem kennzeichnenden Teil des Anspruchs 1 angegebenen Merkmalen gelöst. Die Erfindung beruht auf dem Prinzip, daß nicht mehr zwei diagonal in der Brücke gegenüber liebende Halbleiterschalter zeitgleich in dem gleichen Sinne gesteuert werden, so daß sie gleichzeitig leiten oder sperren, während die jeweils beiden anderen in der Brücke diagonal liegenden Halbleiterschalter gesperrt bleiben. Vielmehr werden erfindungsgemäß die vier Halbleiterschalter der Brücke getrennt und individuell durch Ansteuerschaltungen gesteuert, deren Aufbau durch die in dem kennzeichnenden Teil des Anspruchs 1 angegebene Funktion definiert ist. Insbesondere gehören zu den vier in der Brücke angeordneten Halbleiterschaltern vier Ansteuerschaltungen, um für jeden Halbleiterschalter eine andere Ansteuerfunktion auszuüben. Die vier von den Ansteuerschaltungen erzeugten Ansteuersignale, welche die einzelnen Halbleiterschalter steuern, können durch ein gemeinsames Sollwertsignal sowie gegebenenfalls ein gemeinsames rückgemeldetes Istwertsignal bestimmt werden. Das Sollwertsignal und das Istwertsignal können beispielsweise gewünschte und tatsächliche Strommittelwerte in der Last sein, die in der Diagonalen mit den vier Halbleiterschaltern gebildeten Brücke liegt. Wenn als Last ein Gleichstrommotor eines Servoantriebs dient, können der Sollwert und der Istwert auch durch einen Lage-Sollwert des Servoantriebs und dessen Lage-Istwert gebildet werden. Realisierbar ist auch eine Lageregelung mit unterlagerter Stromregelung.

Das Wesen der Erfindung besteht darin, daß der Freilaufstrom nicht mehr nur durch die Freilaufdioden geführt wird, sondern durch einen vorgegebenen Halbleiterschalter in der Brücke, der zu einem der beiden in der Brücke diagonal gegenüber liegenden, in der Bestromungsphase leitenden Halbleiterschalter in einem anderen Brückenzweig parallel liegt, während der genannte Halbleiterschalter, zu dem er parallel liegt, auch in der Freilaufphase in den leitenden Zustand geschaltet bleibt. Dadurch fließt der Freilaufstrom im wesentlichen über diese beiden leitenden Halbleiterschalter, an denen somit nur geringe Spannungsabfälle entstehen. Die Verlustleistung ist entsprechend gering. Die Energie, die der Last aus der Spannungsquelle zugeführt wird, kann dadurch effektiver genutzt werden. In dem Fall, in dem als Last ein Gleichstrommotor dient, wird dessen Drehmoment in der Freilaufphase nur wenig abfallen. Vorteilhaft ist außerdem die nur geringe Freilaufspannung, die an der Last induziert wird.

Die Ansteuerschaltung für den im wesentlichen den Freilaufstrom übernehmenden Halbleiterschalter gewährleistet, daß dieser Schalter erst dann leitet, wenn der zu ihm in der Brückenschaltung in Reihe liegende Halbleiterschalter gesperrt ist, so daß ein hoher Längsstrom über diese in Reihe liegenden Halbleiterschalter verhindert wird. Die Ansteuerschaltung für den getakteten Halbleiterschalter der beiden in der Brücke diagonal gegenüber liegenden Schalter ist wiederum so eingerichtet, daß vor einer anschließenden Bestromungsphase erst der Halbleiterschalter gesperrt wird, der zusammen mit der zu ihm parallel liegenden Diode den Freilaufstrom übernommen hatte. Die Ansteuerschaltung für den zweiten der beiden in der Brücke diagonal gegenüber liegenden Halbleiterschalter, die den Laststrom in der Bestromungsphase führen, braucht einfach nur ein dauerndes Leiten dieses Halbleiterschalters während der gegebenen Stromrichtung in der Last zu bewirken. Der letzte der vier Halbleiterschalter in der Brücke hat eine solche Ansteuerschaltung, daß er für diese Stromlö richtung in der Last stets geöffnet bleibt.

Die Ansteuerschaltung für den Halbleiterschalter in dem Brückenzweig, der neben dem Brückenzweig mit dem leitenden Halbleiterschalter der in der Brücke diagonal gegenüber liegenden Halbleiterschalter, die den Strom durch die Last in der Bestromungsphase leiten, liegt, ist nach Anspruch 2 besonders zweckmäßig so ausgebildet, daß der in der Freilaufphase leitend gesteuerte Halbleiterschalter erst dann in diesen Zustand gesteuert wird, wenn die zu ihm parallel liegende Freilaufdiode den Freilaufstrom übernommen hat. Damit wird gewährleistet, daß der zu diesem Halbleiterschalter in der Brücke in Reihe liegende Halbleiterschalter gesperrt ist und einen Längsstrom über beide Halbleiterschalter verhindert.-Um die vorangehend genannte Ansteuerschaltung und weitere Ansteuerschaltungen für je einen Halbleiterschalter zu steuern, ist nach Anspruch 3 vorteilhaft eine die Spannung an der Last und die Schaltzustände der Halbleiterschalter überwachende Überwachungsschaltung vorgesehen, die insgesamt Längsströme, d.h. die Spannungsquelle belastende,aber nicht über die Last fließende Ströme verhindert, welche auch die ihn leitenden Halbleiterschalter gefährden können.

Statt dieser Überwachung der Halbleiterschaltzustände · mit der Überwachungsschaltung kann nach Anspruch 4 ein Wartezeitgenerator vorgesehen werden, der ebenfalls beim Umschalten von einer Bestromungsphase zu einer Freilaufphase und umgekehrt Längsströme durch zwei in Reihe liegende Brückenzweige verhindert. Die Wartezeiten können im Wartezeitgenerator durch Zähler, Monoflops oder Ausgleichsfunktionen, die beispielsweise durch eine Widerstandskondensatorkombination erzeugt werden, realisiert werden. Statt fester Wartezeiten können auch variable Wartezeiten z.B. abhängig von der Versorgungsspannung und/oder dem Betrag des Laststroms vorgesehen werden.

Zu dem getakteten Betrieb der Halbleiterschalter in der Brücke mit einem Tastverhältnis, das insbesondere der Differenz eines Sollwertsignals zu einem Istwertsignal entspricht, werden die Ansteuerschaltungen durch einen Pulslängenmodulator gesteuert.

Wenn in der Last eine Stromrichtungsumkehr von positiv gezähltem zu negativ gezähltem Strom gewünscht wird, die ebenfalls durch die Differenz zwischen Sollwertsignal ertsignal bestimmt sein kann, sind die Ansteuerschaltungen für die Halbleiterschalter in der Brücke nach den Ansprüchen 6 und 7 erweitert. Der Anspruch 6 beinhaltet dabei die Merkmale der Ansteuerschaltungen, die zur gesteuerten Stromrichtungsumkehr in der Last während einer Freilaufphase vorgesehen sind,und Anspruch 7 die Erweiterungen, die zur gesteuerten Stromrichtungsumkehr während der Bestromungsphase zu realisieren sind. Wenn die Stromrichtungsumkehr erfolgen soll, so sind damit die Halbleiterschalter zunächst von der Bestromungsphase in die Freilaufphase zu steuern. Die Umsteuerung der vier Ansteuerschaltungen für die Halbleiterschalter in der Brücke wird durch eine gemeinsame Stromrichtungsumkehrschaltung gesteuert.

Als Halbleiterschalter in der Brücke sind bevorzugt MOSFET-Transistoren mit jeweils integrierter Freilaufdiode vorgesehen.

Weitere je nach Anwendungsfall zweckmäßige Varianten der Halbleiterschalter in der Brücke sind in den Ansprüchen 10 und 11 angegeben.

Ausführungsbeispiele der Erfindung werden im folgenden anhand einer Zeichnung mit 19 Figuren erläutert. Es zeigen:

Fig. 1 eine Brückenendstufe in stark vereinfachter Darstellung ohne Ansteuerungsschaltungen mit Stromverläufen während einer Bestromungsphase sowie einer Freilaufphase,

Fig. 2 die Brückenendstufe nach Fig. 1, in welche der Stromverlauf in einer Freilaufphase nach Stromrichtungsumkehr und vor Verschwinden des Stroms dargestellt ist,

Fig. 3 eine Brückenendstufe mit Halbleiterschaltern, welche integrierte Freilaufdioden umfassen, mit Ansteuerschaltungen und einer die Ansteuerschaltungen steuernden Überwachungseinheit,

Fig. 4 eine Variante der Schaltungsanordnung nach Fig. 3, in der statt einer Überwachungseinheit ein Wartezeitgenerator die Ansteuerschaltungen steuert, sowie mit einer Stromerfassungsschaltung, welche ein die gesamte Schaltungsanordnung steuerndes Istwertsignal bildet,

Fig. 5 eine Variante der Schaltungsanordnung nach Fig. 4, in der jedoch statt der Stromerfassungsschaltung eine Lage-Istwerterfassungseinrichtung vorgesehen ist,

Fig. 6 die Brückenendstufe nach Fig. 1 mit einem detaillierter dargestellten Halbleiterschalter,

Fig. 7 ein Zeitdiagramm der aus den Strömen in den Halbleiterschaltern in Fig. 1 umgewandelten Spannungen $U_1$, $U_2$, $U_3$ und $U_4$ sowie der Ausgangsspannungen $U_{PWM}$ des Pulslängenmodulators und $U_{out}12$ der Stromrichtungsumkehrschaltung in Fig. 3 in Bezug auf ein Eingangssignal,

der Freilaufphase aufgetreten wäre.

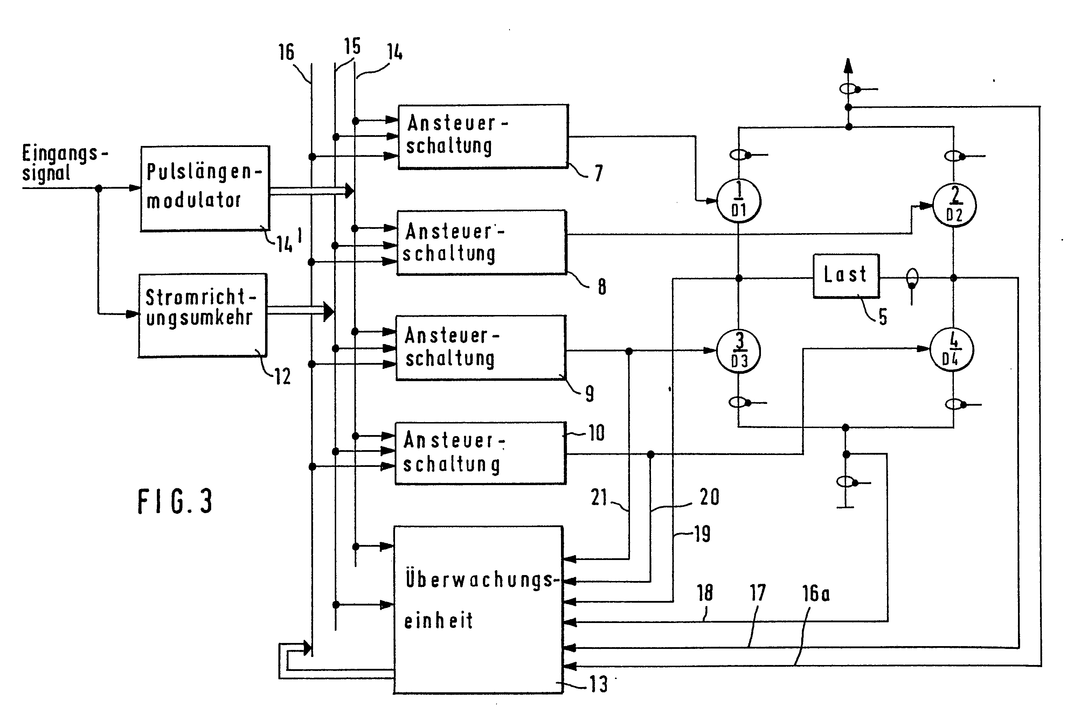

In Fig. 3 ist dargestellt, daß ein Eingangssignal, welches beispielsweise eine Regelabweichung einer Regelgröße, die mit der Last 5 geregelt werden soll, darstellt, oder ein Stromsteuersignal für die Last 5,einen Pulslängenmodulatur 14 sowie die Stromrichtungsumkehrschaltung 12 beaufschlagt. Der Pulslängenmodulator erzeugt aus dem analogen Eingangssignal ein getaktetes Ausgangssignal, welches an einer Sammelleitung 14a liegt. Die Stromrichtungsumkehrschaltung erzeugt bei bestimmten Grenzwerten des Eingangssignals Stromrichtungsumkehrbefehle auf der Sammelleitung 15. An einer weiteren Sammelleitung 16 ist ein Ausgang einer Überwachungseinheit 13 angeschlossen. Sämtliche Sammelleitungen stehen mit Eingängen der vier Ansteuerschaltungen 7 - 10 für die vier Halbleiterschalter 1 - 4 in Verbindung.

In den Figuren 3 - 5 ist angedeutet, daß die Freilaufdioden D1 - D4 in die Halbleiterschalter 1 - 4 integriert sind, wenn diese in MOSFET-Technik ausgeführt sind. Besonders zweckmäßig sind die Halbleiterschalter 3 und 4 N-Kanal MOSFETS, die mit positiven Ansteuerspannungen zu beaufschlagen sind. Die Halbleiterschalter 1 und 2 können ebenfalls MOSFETS sein, aber auch bipolare oder sonstige Halbleiterschalter.

Mit der Überwachungseinheit 13 werden die Potentiale bzw. Spannungen der Schaltstrecken der Halbleiterschalter 1 - 4 überwacht, sowie die Spannung an der Last 5. Dazu dienen die Überwachungsleitungen 16a - 19. Zusätzliche Überwachungsleitungen 21 und 22 melden die Ansteuerspannungen für die Halbleiterschalter 4 bzw. 3 zur Überwachungseinheit zurück.

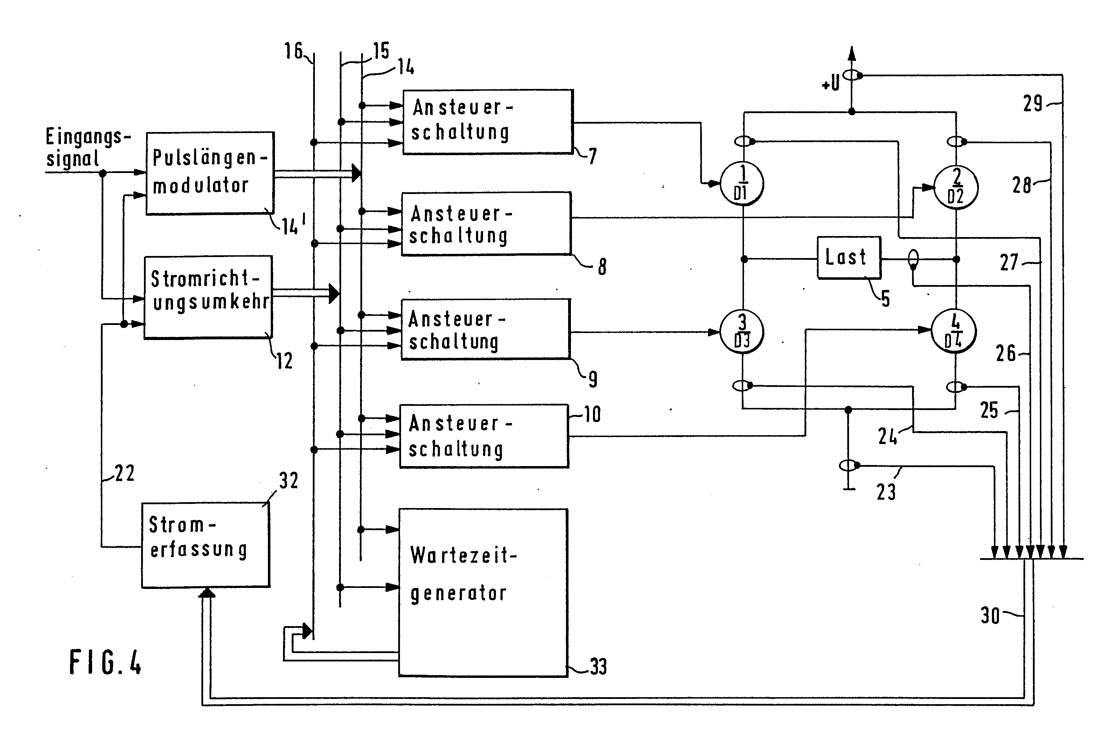

Die Schaltungsanordnung nach Fig. 4 unterscheidet sich von derjenigen nach Fig. 3 zunächst dadurch, daß als Eingangssignal ein Strom-Sollwert dient, der in den Pulslängenmodulator 14 und die Stromrichtungsumkehrschaltung 12 eingespeist wird. Außerdem wird durch eine Istwertleitung 22 ein Strom-Istwert in den Pulslängenmodulator und die Stromrichtungsumkehrschaltung eingespeist. In dem Pulslängenmodulator und der Stromrichtungsumkehrschaltung wird die Differenz zwischen Sollwert und Istwert gebildet und eine entsprechende pulslängenmodulierte Ausgangsgröße bzw. ein Stromrichtungsbefehl gebildet.

Zur Bildung des Strom-Istwerts können Ströme in der Last 5, in sämtlichen Halbleiterschaltern 1 - 4, sowie in den Zuleitungen zu der Spannungsquelle, die nicht mit Bezugszeichen versehen sind, erfaßt werden, wie es im einzelnen mit den Stromerfassungsleitungen 23 - 29 dargestellt ist. Die Stromerfassungsleitungen 23 - 29 sind - mit einem Strang 30 zusammengefaßt dargestellt - zu einer Stromerfassungsschaltungsanordnung 32 geführt.

Weiterhin steht in Fig. 4 die Sammelleitung 16 statt mit der (Spannungs-)Überwachungseinheit 13 in Fig. 3 mit einem Wartezeitgenerator 33 in Verbindung, mit dem die Wartezeiten beim Umschalten der Halbleiterschalter erzeugt werden, damit keine unerwünschten Schaltzustände auftreten, die insbesondere Längsströme in der Brückenschaltung hervorrufen.

Insgesamt wird mit der Schaltungsanordnung nach Fig. 4 ein Strom in der Last 5 eingeregelt, der dem eingestellten Sollwert gleich ist.

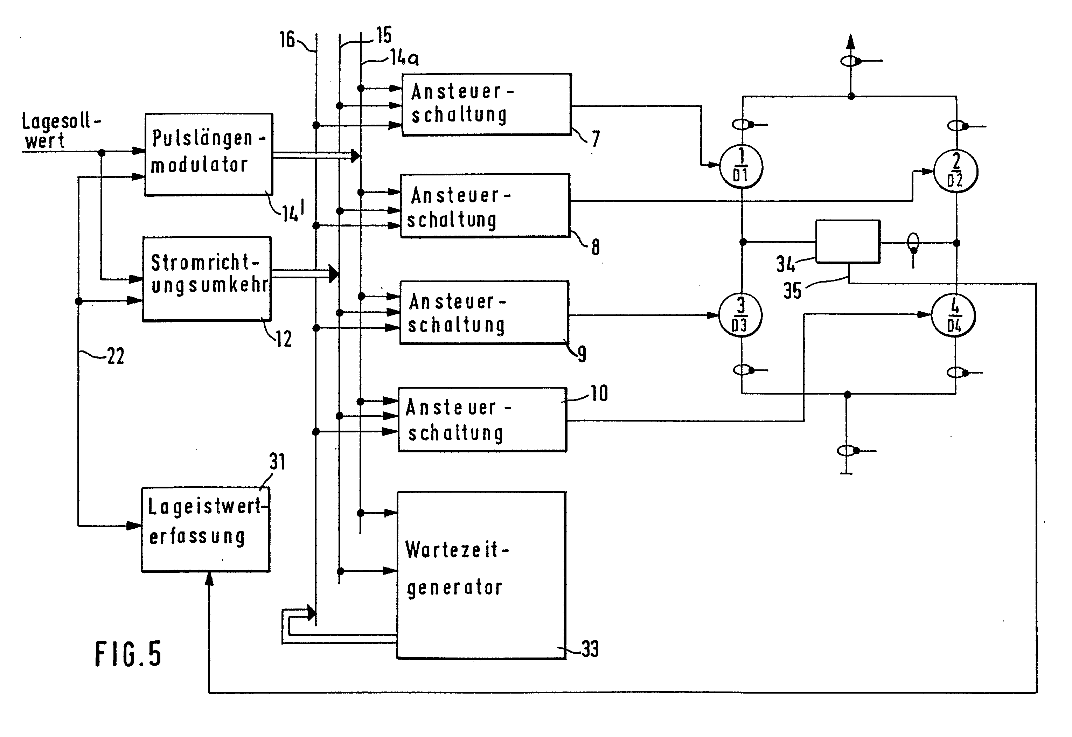

Die Schaltungsanordnung nach Fig. 5 unterscheidet sich von derjenigen nach Fig. 4 dadurch, daß als Last ein GleichstromServomotor einer Lageregelungseinrichtung dient, die mit eine Lagerückmeldung ausgestattet ist. Der GleichstromServomotor ist mit 34 bezeichnet. Eine Lagerückmeldungsleitung trägt das Bezugzeichen 35. Sie führt zu einer Lage-Istwerterfassungseinrichtung 31, die wiederum auf der Istwertleitung 22 ein Istwertsignal erzeugt, welches der mit dem Gleichstrom-Servomotor eingestellten Lage entspricht. Der Istwert wird ähnlich wie ein Lage-Sollwert wiederum in den Pulslängenmodulator 14 und die Stromrichtungsumkehrschaltung 12 eingespeist. Die in Fig. 5 dargestellte Schaltung wirkt im übrigen wie diejenige in Fig. 4, wobei jedoch hier die mit dem Lage-Sollwert vorgegebene Lage mit dem Gleichstrom-Servomotor 34 eingestellt wird.

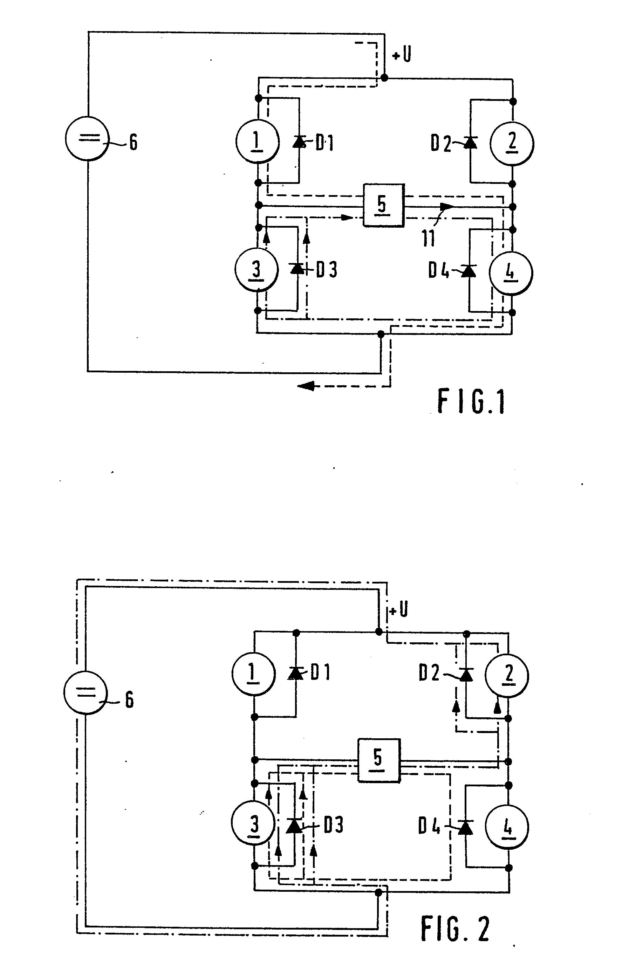

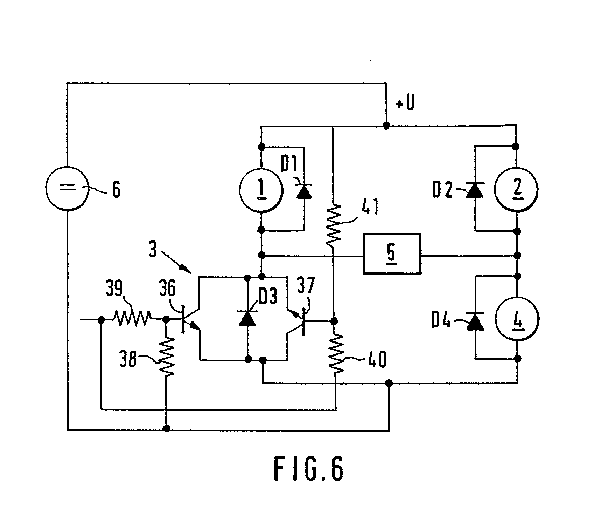

In Fig. 6 ist der allgemein mit 3 bezeichnete Halbleiterschalter der Brücke detaillierter dargestellt. Er umfaßt zwei gemäß Fig. 6 zusammengeschaltete NPN-Bipolartransistoren 36, 37 mit der Freilaufdiode D3. Die NPN-Bipolartransistoren 36, 37 liegen über je einem Widerstand 38 bzw. 39 auf einem Potential der Spannungsquelle und werden über die Vorwiderstände 40 bzw. 41 wie zu den Figuren 1 und 2 erläutert angesteuert.

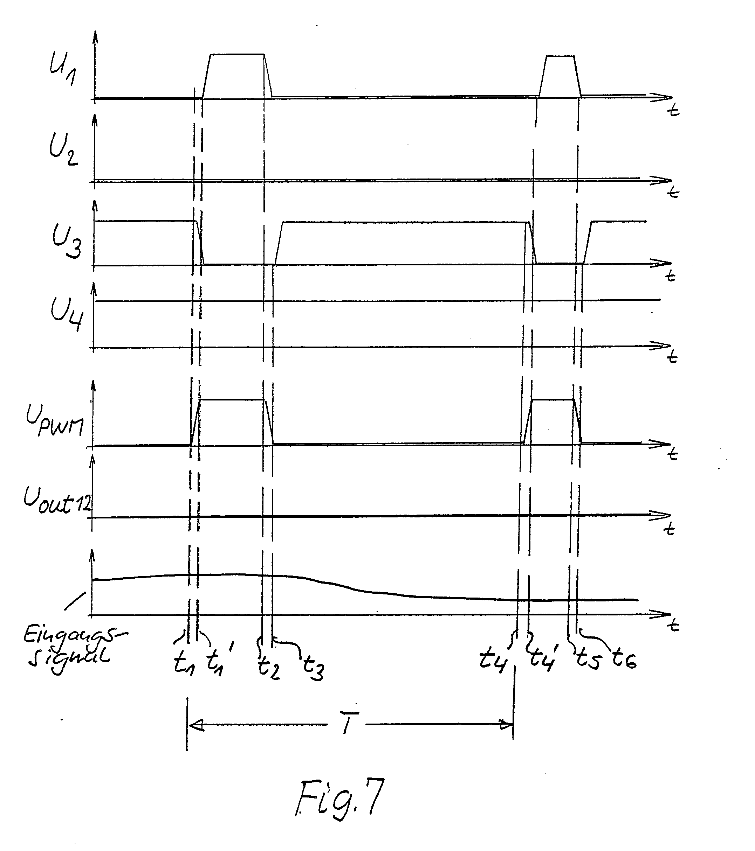

In Fig. 7 sind mit $U_1$, $U_2$, $U_3$, $U_4$ zeitliche Spannungsverläufe bezeichnet, die den Strömen in den Halbleiterschaltern 1, 2, 3, 4 in Fig. 1 entsprechen. Die Spannungen $U_1$ - $U_4$ werden durch Wandlung aus den Strömen erzeugt, die in den Zweigen der Brückenschaltung fließen. Diese Wandler sind in Fig. 3 ohne Bezugzeichen angedeutet. Zu den Spannungsverläufen $U_1$ - $U_4$ gehört ein Eingangssignal, welches gemäß Fig. 3 den Pulslängenmodulator 14 und die Stromrichtungsumkehrschaltung 12 beaufschlagt. Die Ausgangsspannung des Pulslängenmodulators ist in Fig. 7 mit $U_{PWM}$ bezeichnet und die Ausgangsspannung der Stromrichtungsumkehrschaltung 12 ist als $U_{out12}$ angegeben. Der Ausgangsspannung $U_{out12}$ in Fig. 7 soll eine positive Stromrichtung entsprechend Pfeil 11 in Fig. 1 entsprechen. Wie zu Fig. 1 bereits beschrieben, sind für diese Stromrichtung die Halbleiterschalter 1 ab dem Zeitpunkt $t_1$ geschlossen, was durch einen hohen Spannungspegel $U_1$ angedeutet ist, während

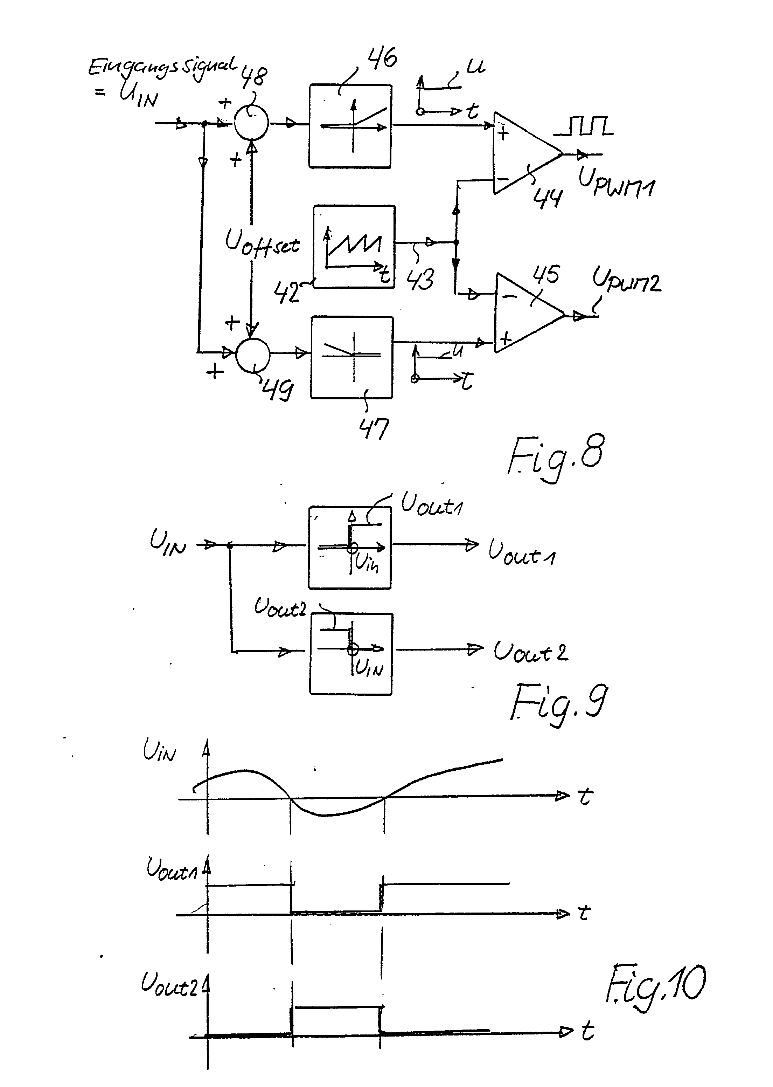

Fig. 8 ein bevorzugtes Ausführungsbeispiel eines Pulslängenmodulators,

Fig. 9 ein bevorzugtes Ausführungsbeispiel einer Stromrichtungsumkehrschaltung,

Fig. 10 Zeitdiagramme der Ausgangssignale der Stromrichtungsumkehrschaltung nach Fig. 9,

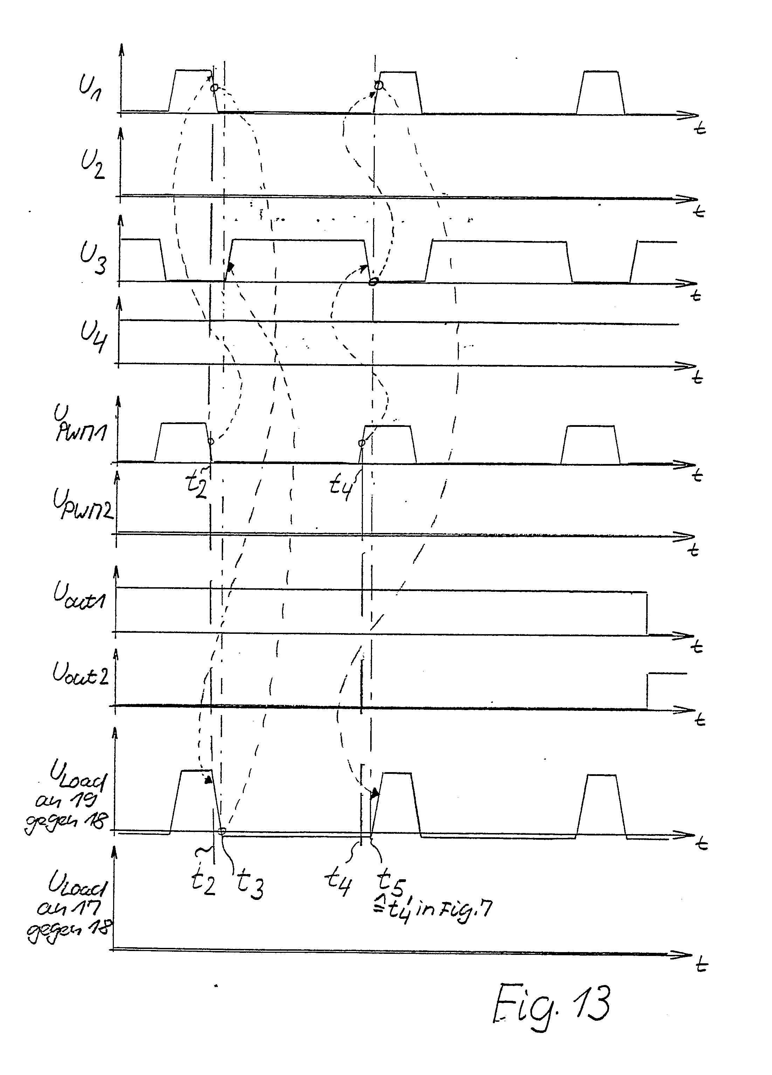

Fig. 11 ein Beispiel einer Stromerfassungsschaltung,

Fig. 12 eine Überwachungseinheit für alle Halbleiterschalter,

Fig. 13 Zeitdiagramme der Signale in der Brückenendstufe mit Ansteuerungsschaltung bei positiver Stromrichtung durch die Last,

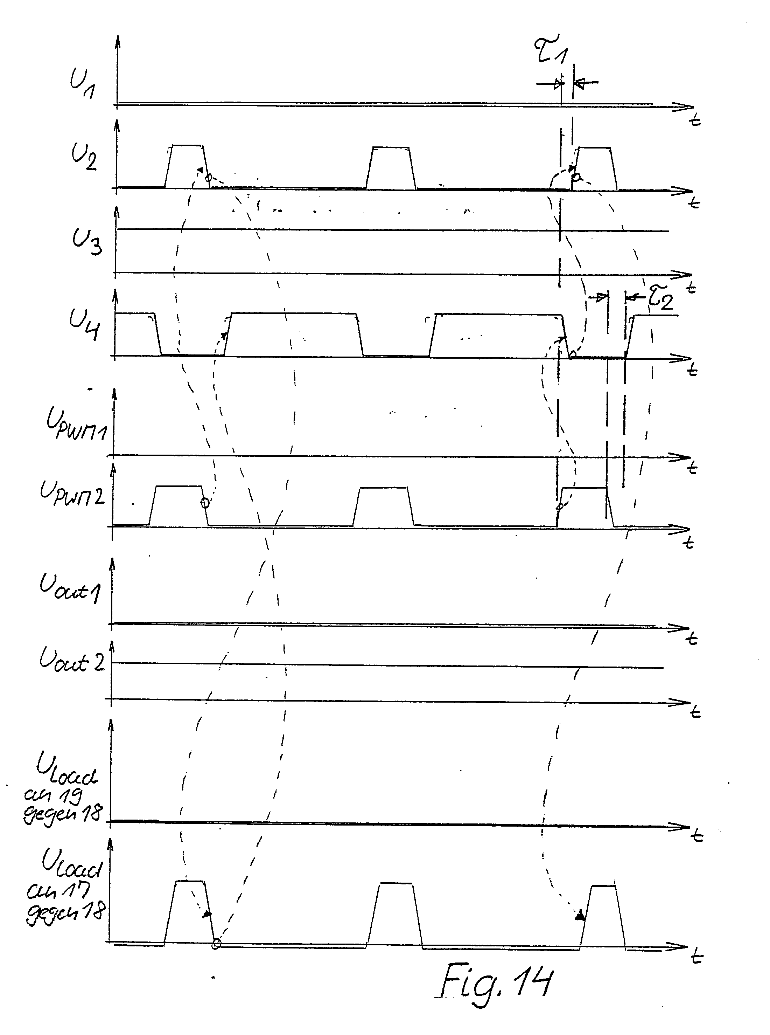

Fig. 14 zu Fig. 13 analoge Zeitdiagramme bei umgekehrter, negativer Stromrichtung durch die Last,

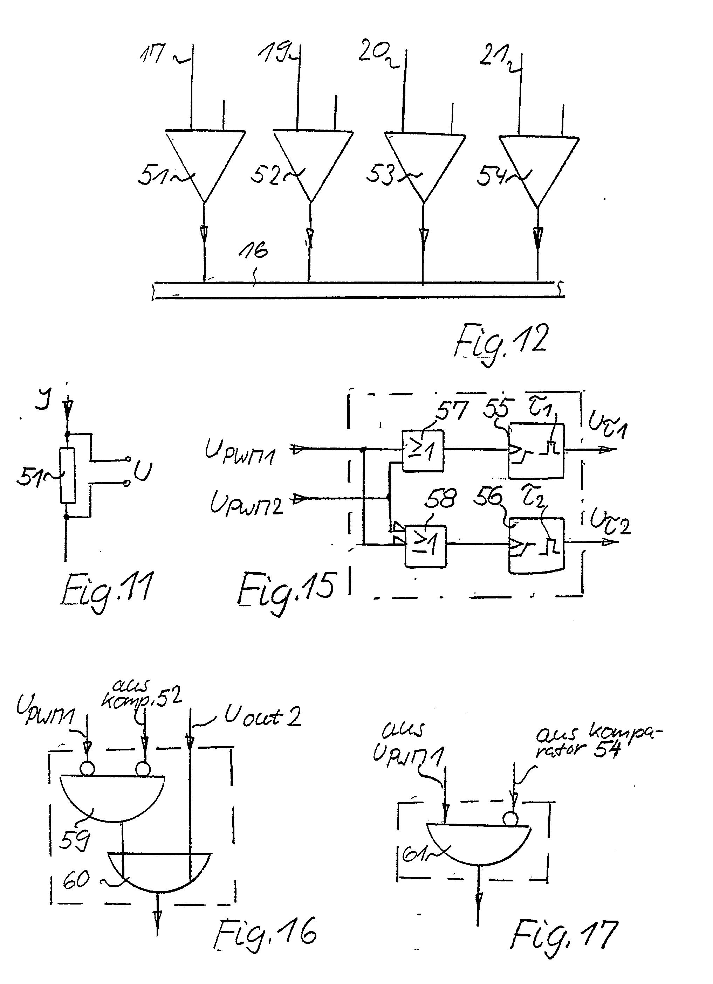

Fig. 15 ein Ausführungsbeispiel eines Wartezeitgenerators und

Fig. 16, 17, 18, 19 Ausführungsbeispiele für die Ansteuerschaltungen 7 bzw. 8 bzw. 9 bzw. 10 in Fig. 3 und 5.

In Fig. 1 und 2 sind mit 1 - 4 Halbleiterschalter bezeichnet, die in einer Brückenschaltung angeordnet sind. In einer Diagonalen der Brücke liegt eine ohmsch-induktive Last 5. Die Brücke wird aus einer Spannungsquelle 6 mit der in Fig. 1 dargestellten Polarität +U gespeist. Zu jedem der gesteuerten Schalter 1 - 4 ist eine Freilaufdiode DI - D4 unmittelbar parallel geschaltet.

Jeder der vier Halbleiterschalter wird durch eine Ansteuerschaltung gesteuert, die in den Figuren 1 und 2 nicht dargestellt sind, jedoch aus den Figuren 3 - 5 ersichtlich sind. Die Ansteuerschaltungen sind darin mit den Bezugszeichen 7 - 10 versehen. Der Aufbau und die Ansteuerfunktion jeder Ansteuerschaltung ergibt sich aus der nachfolgenden Beschreibung der Schaltzustände der Halbleiterschalter 1 - 4 in den Figuren 1 und 2.

In Fig. 1 wird davon ausgegangen, daß hier für eine bestimmte Stromrichtung - Pfeil 11 - in der Last 5 während einer Bestromungsphase die Halbleiterschalter 1 und 4 geschlossen sind. Dann ergibt sich der unterbrochen dargestellte Stromverlauf von der Spannungsquelle über den Halbleiterschalter 1, die Last 5 und den Halbleiterschalter 4 zurück zur Spannungsquelle.

Der Stromfluß aus der Spannungsquelle wird unterbrochen, indem der Halbleiterschalter 1 gesperrt wird, während der Halbleiterschalter 4 eingeschaltet bleibt. Damit beginnt die Freilaufphase, in der der Strom abklingend durch die ohmsch-induktive Last 5 weiterfließt, und zwar entsprechend dem strichpunktierten Stromverlauf weiterhin über den leitenden Halbleiterschalter 4 und zunächst über die Freilaufdiode D3. Wenn der Ansteuerschaltung 9 in Figur 3 gemeldet ist, daß der Halbleiterschalter 1 sperrt und die Freilaufdiode D3 den Freilauf strom übernommen hat, so wird der Halbleiterschalter 3 in den leitenden Zustand gesteuert. Er übernimmt damit einen wesentlichen Teil des durch die Last 5 fließenden Stroms.

Wenn der Last 5 aus der Spannungsquelle 6 wieder Strom zugeführt werden soll, so wird durch die Ansteuerschaltung 9 zunächst der Halbleiterschalter 3 ausgeschaltet. Wenn der Ansteuerschaltung 7 für den Halbleiterschalter 1 gemeldet ist, daß dieser Vorgang abgeschlossen ist, wird der Halbleiterschalter 1 wieder eingeschaltet. Der beschriebene getaktete Schaltbetrieb kann von neuem beginnen.

Der Halbleiterschalter 4 bleibt während der gesamten getakteten Ansteuerung für die Stromrichtung 11 stets geschlossen, wofür seine Ansteuerschaltung 10 ausgelegt ist.

Wenn in der Last eine Stromrichtungsumkehr in eine Richtung entgegen des Pfeils 11 in Fig. 1 erfolgen soll, was durch eine Stromrichtungsumkehrschaltung 12 in den Figuren 3 - 5 bestimmt wird, so verlaufen die zugehörigen Ansteuerfunktionen während der Freilaufphase, in welcher die Halbleiterschalter 3 und 4 leiten, folgendermaßen:

Als erstes wird der Halbleiterschalter 4 gesperrt. Daraufhin fließt der Strom in der Last 5 weiter über den Halbleiterschalter 3 sowie über die Freilaufdiode D2 zurück in die Batterie. Sobald erkannt worden ist, daß der Halbleiterschalter 4 gesperrt ist was mit einer Überwachungseinheit 13 erfolgen kann - siehe Figur 3 - so wird der Halbleiterschalter 2 durch seine Ansteuerschaltung 8 eingeschaltet. Der Strom in der Last fließt abklingend entgegen der Spannung der Spannungsquelle weiter, bis er auf 0 abgebaut ist (Ende der Freilaufphase),und nimmt anschließend in der gewünschten umgekehrten Richtung wieder zu (neue Bestromungsphase).

Der Halbleiterschalter 3 bleibt während der gesamten Zeit, in der Strom durch die Last entgegen der Pfeilrichtung 11 fließen soll, leitend.

Aus dem strichpunktiert dargestellten Stromverlauf in Fig. 2 ist ersichtlich, wie der Strom in der Freilaufphase fließt, wenn in dieser ein Stromrichtungsumkehrbefehl von der Stromrichtungsumkehrschaltung 12 gegeben wurde und der Halbleiterschalter 4 bereits gesperrt ist.

Wenn der Befehl zur Stromrichtungsumkehr während der Bestromungsphase gegeben wird, wenn die Halbleiterschalter 1 und 4 leiten, so wird zunächst der Halbleiterschalter 1 gesperrt und anschließend der Halbleiterschalter 3 eingeschaltet, wie oben für den Übergang von der Bestromungsphase auf die Freilaufphase beschrieben. In der dann somit vorliegenden Freilaufphase erfolgt die weitere Ansteuerung der Halbleiterschalter in der ebenfalls oben beschriebenen Weise, wie wenn der Befehl der Stromrichtungsumkehr ursprünglich in

der Halbleiterschalter 3 geöffnet ist, was durch einen niedrigen Spannungspegel $U_3$ angezeigt ist. Der Halbleiterschalter 2 ist ständig gesperrt - siehe niedriger Pegel $U_2$ -während der Halbleiterschalter 4 ständig leitet - siehe hoher Pegel $U_4$. Wenn entsprechend dem Spannungssignal $U_{PWM}$, dessen Tatkverhältnis von dem Eingangssignal abhängt, der Stromfluß aus der Spannungsquelle 6 zu dem Zeitpunkt $t_2$ unterbrochen wird, fällt der Strom und damit die Spannung $U_1$ in dem Zweig ab, in dem der Halbleiterschalter 1 liegt. In dieser zu dem Zeitpunkt $t_2$ beginnenden Freilaufphase wird der Schalter 3 zunächst noch nicht leitend gesteuert, siehe niedrig bleibender Spannungspegel $U_3$. Erst am Ende der Freilaufphase zu dem Zeitpunkt $t_3$, wenn gemeldet ist, daß der Strom durch den Halbleiterschalter $U_1$ gänzlich abgeklungen ist, wird der Halbleiterschalter 3 leitend gesteuert, siehe ansteigender Pegel von $U_3$ ab $t_3$. Dabei bleibt der Halbleiterschalter 4, wie stets während dieser Stromrichtung, geschlossen, siehe hoher Pegel $U_4$, und der Halbleiterschalter 2 geöffnet, siehe niedriger Pegel $U_2$.

In Fig. 7 ist weiter angedeutet, wie zu einem niedriger werdenden Eingangssignal ab dem Zeitpunkt $t_4$ ein kürzerer hoher Pegel des Impulses $U_{PWM}$ bis $t_5$ gehört, als die Zeitdifferenz $t_1$ minus $t_2$. Entsprechend verkürzt sind die Einschaltdauer des Schalters 1, siehe die Spannung $U_1$, und die Ausschaltzeit oder Sperrzeit des Schalters 3, siehe die Spannung $U_3$, die aber erst nach einer weiteren Freilaufphase von $t_5$ bis $t_6$ wieder ansteigt.

In Fig. 7 entspricht die Zeitdifferenz $t_4$ minus $t_1$ der Periode oder Wiederholzeit des Impulses $U_{PWM}$, der von dem Pulslängenmodulator abgegeben wird und der im Unterschied zu dem Tastverhältnis oder der Einschaltdauer des Impulses unabhängig von dem Eingangssignal konstant ist.

Das genannte Tastverhältnis wird dort auch als Puls/Pausenverhältnis bezeichnet.

Ein bevorzugtes Ausführungsbeispiel des Pulslängenmodulators 14 in Fig. 5 ist in Fig. 8 - schematisch dargestellt. Der Pulslängenmodulator umfaßt einen Sägezahngenerator 42 mit Integrator, der eine sägezahnförmige Ausgangsspannung auf eine Leitung 43 abgibt. Die Leitung 43 ist mit je einem Eingang eines Komparators 44 bzw. 45 verbunden. Je ein zweiter Eingang jedes der beiden Komparatoren steht mit dem Ausgang eines Funktionsgenerators 46 bzw. 47 in Verbindung. Der Funktionsgenerator 46 wandelt eine positive Eingangsspannung in eine proportionale Ausgangsspannung um, wenn die Eingangsspannung positiv ist und erzeugt keine Ausgangsspannung, wenn die Eingangsspannung negativ ist. Der Funktionsgenerator 47 erzeugt keine Ausgangsspannung, wenn die Eingangsspannung positiv ist und erzeugt eine der Eingangsspannung proportionale Ausgangsspannung mit umgekehrtem Vorzeichen, wenn die Eingangsspannung negativ ist. Beide Komparatoren werden mit dem Eingangssignal $U_{in}$ über Additionsglieder 48, 49 gespeist, in welche ein zusätzliches Offsetsignal zur Verschiebung der Eingangsspannung eingegeben werden kann. Das Offsetsignal dient zur Nullpunktverschiebung des Knicks der Kennlinie in den Funktionsgliedern. Wenn das Offsetsignal Null ist, gibt bei Eingangssignalen größer Null der Funktionsgenerator 46 ein Ausgangssignal ab, welches in dem Komparator mit dem Sägezahnsignal auf der Leitung 43 verglichen wird. Umgekehrt wird bei einem Eingangssignal kleiner Null der Komparator 45 von dem Funktionsgenerator 47 beaufschlagt und gibt ein Ausgangssignal ab. Die Ausgangssignale der beiden Komparatoren sind mit $U_{PWM1}$ und $U_{PWM2}$ bezeichnet. Sie gelangen in die Busleitung 14a in Fig. 5. Es wird bemerkt, daß zum Verständnis der Schaltungsanordnung in Fig. 5 und der Zeitfunktionen der Schaltzustände in Fig. 7 ein Ausgangssignal $U_{PWM}$ des Pulslängenmodulators genügt, welches beispielsweise $U_{PWM}$ in Fig. 8 entsprechen kann.

Eine bevorzugte Ausführungsform der Stromrichtungsumkehrschaltung umfaßt zwei Funktionsgeneratoren 49, 50, die parallel zueinander mit dem Eingangssignal $U_{in}$ gespeist werden und an deren Ausgänge die Ausgangsspannungen $U_{out1}$ und $U_{out2}$ entstehen. Die Kennlinien der Funktionsgeneratoren sind in den Blöcken dargestellt. Der Funktionsgenerator 49 gibt nur bei positivem Eingangssignal eine konstante Ausgangsspannung $U_{out1}$ ab, der Funktionsgenerator 50 hingegen eine Ausgangsspannung $U_{out2}$ bei negativem Eingangssignal. Diese Signale $U_{out1}$ und $U_{out2}$ werden in Fig. 3 in die Busleitung 15 eingespeist. Es wird bemerkt, daß zum Verständis der Funktion der gesamten Schaltungsanordnung zur getakteten Ansteuerung von Halbleiterschaltern ein Ausgangssignal $U_{out}$ ausreicht, weshalb in dem Zeitdiagramm in Fig. 7 nur ein Ausgangssignal $U_{out12}$ dargestellt ist.

In Fig. 10 sind hingegen die Ausgangssignale $U_{out1}$ und $U_{out2}$ in Abhängigkeit von einem Eingangssignal $U_{in}$ bei einer Offsetspannung von Null dargestellt.

In Fig. 11 ist ein Beispiel einer Stromerfassungsschaltung gezeigt, welche die Ströme in den Zweigen der Brückenschaltung und in weiteren mit der Brückenschaltung in Verbindung stehenden Leitungen in eine proportionale Spannung, beispielsweise die Spannungen $U_1$, $U_2$, $U_3$, $U_4$ umwandelt. Jede Stromerfassungsschaltung besteht aus einem Meßwiderstand, z.B. 51, an dem eine Spannung $U$ in Abhängigkeit von einem Strom $I$ abfällt.

Fig. 12 zeigt eine Überwachungseinheit für sämtliche Halbleiterschalter. Die Überwachungseinheit umfaßt vier Komparatoren 51 - 54, die auf je einen Sollwert voreingestellt sind und deren Ausgänge zu der Busleitung 16 führen. Eingänge der Komparatoren 53, 54 stehen mit den Leitungen 20, 21 an den Steuereingängen der Halbleiterschalter 4 und 3 in Verbindung; weitere Überwachungen erfolgen über die Leitungen 17 und 19 an der Last 5 mittels der Komparatoren 51 und 52.

Die Funktion der Überwachungseinheit wird im folgenden anhand der Fig. 13 erläutert, in welcher Zeitdiagramme der Signale $U_1$ - $U_4$, $U_{PWM1}$, $U_{PWM2}$, $U_{out1}$, $U_{out2}$ und der Lastspannungen gegen Erdpotential dargestellt sind, und zwar einmal wie die Lastspannung an der Leitung 19 und einmal wie die Lastspannung an der Leitung 17 gegen das Erdpotential erfaßt wird. Fig. 13 betrifft eine bestimmte hier positive Stromrichtung durch die Last. Die Fig. 13 zeigt die Zeitabläufe im übrigen noch genauer als sie in Fig. 7 dargestellt sind. Es wird von dem Zeitpunkt $t_2$ ausgegangen, bei dem das Ausgangssignal $U_{PWM1}$ des Pulslängenmodulators auf einen niedrigeren Pegel abfällt und den Halbleiterschalter 1 direkt sperrt. Wenn das Spannungssignal $U_1$· an dem Halbleiterschalter 1 kleiner wird, fällt auch die Spannung an dem Lastwiderstand $U_{load}$ an der Leitung 19 gegen Erdpotential ab. Wenn dabei die Spannung an der Leitung 19 einen voreingestellten Schwellwert zu dem Zeitpunkt $t_3$ erreicht, signalisiert dies das Ende der Freilaufphase zwischen $t_2$ und $t_3$ und der Halbleiterschalter 3 wird leitend geschaltet, was durch das ansteigende Potential $U_3$ signalisiert wird. Zum Zeitpunkt $t_4$ gibt das Ausgangssignal $U_{PWM1}$ des Pulslängenmodulators hingegen den Befehl zum Sperren des Halbleiterschalters 3, der zum Zeitpunkt $t_5$ einen vorgegebenen Pegel erreicht, welcher wiederum das Einschalten des Halbleiterschalters 1 veranlaßt, siehe steigender Signalpegel $U_1$ an dem letztgenannten Halbleiterschalter.

Fig. 14 zeigt analog dazu die zeitlichen Verläufe der Signale, wenn durch die Ausgangsspannungen $U_{out1}$ und $U_{out2}$ der Stromrichtungsumkehrschaltung 12 eine negative Stromrichtung durch die Last 5 hervorgerufen wird. In diesem Fall wird durch das Ausgangssignal $U_{PWM2}$ des Pulslängenmodulators das Ausschalten eines der Halbleiterschalter 2 und 4 direkt bestimmt, während das Einschalten dieser Halbleiterschalter verzögert erfolgt, wenn die Überwachungseinheit das Erreichen der Spannungsbedingung signalisiert.

In Fig. 15 ist ein Ausführungsbeispiel eines Wartezeitgenerators 33 in Fig. 5 dargestellt, der das Einschalten bestimmter Halbleiterschalter der Brückenschaltung nicht in Abhängigkeit von einer überwachten Spannungsbedingung, sondern von einer fest vorgegebenen Wartezeit $\tau_1$ bzw. $\tau_2$ veranlaßt. Die Verzögerung $\tau_1$ erfolgt zwischen der

positiven ansteigenden Flanke eines Ausgangssignals $U_{PWM1}$ bzw. $U_{PWM2}$ des Pulslängenmodulators und dem mit diesem Signal einzu schaltenden Halbleiterschalter, während die Verzögerung $\tau_2$ zwischen der Rückflanke des Signals $U_{PWM1}$ bzw. $U_{PWM2}$ und dem durch diese leitend zu steuernden Halbleiterschalter erfolgt. Die Verzögerungszeiten $\tau_1$ und $\tau_2$ sind als Beispiele in dem rechten oberen Teil in Fig. 14 eingetragen.

In Fig. 15 ist ein Ausführungsbeispiel eines Wartezeitgenerators dargestellt, mit dem die Zeitverzögerungen $\tau_1$ bzw. $\tau_2$ erzeugt werden. Er besteht im wesentlichen aus zwei Monoflops mit Triggereingang 55 und 56, die aus einer Flanke am Eingang einen Puls der Länge $\tau_1$ bzw. $\tau_2$ erzeugen. Die Monoflops werden, wie in der Fig. 15 dargestellt, über ODER-Glieder 57, 58 von den Ausgängen $U_{PWM1}$ bzw. $U_{PWM2}$ des Pulslängenmodulators gesteuert. Das ODER-Glied 57 ist so geschaltet, daß es die Vorderflanke von $U_{PWM1}$ durchläßt, um die Verzögerungszeit $\tau_1$ mit dem Monoflop 55 zu erzeugen. Das ODER-Glied 58 weist hingegen Invertierungseingänge auf, so daß die Rückflanke als Triggersignal zur Erzeugung von $\tau_2$ durchgelassen wird.

In den Figuren 16 - 19 sind Beispiele für die Ansteuerschaltungen dargestellt, die im Zusammenhang mit der Überwachungseinheit nach Fig. 12 zu sehen sind. Die Funktionen der Ansteuerschaltungen ergeben sich aus den allgemein bekannten Symbolen ohne weiteres, zusätzlich können die Signaldiagramme in den Figuren 13 und 14 herangezogen werden:

Die Ansteuerschaltung 9 in Fig. 3 besteht aus einem UND-Glied 59 mit invertierenden Eingängen sowie einem nachgeschalteten ODER-Glied 60. Mit dem UND-Glied 59 wird die Taktung des Schalters 3 durchgeführt, der leitend gesteuert wird, wenn das Ausgangssignal $U_{PWM1}$ des Pulslängenmodulators Low ist und die Signalspannung auf der Leitung 19 der Überwachungseinheit 13, siehe Fig. 12, kleiner als die vorgegebene Schwelle ist. Dauernd eingeschaltet wird der Halbleiterschalter 3 hingegen über das ODER-Glied 60 direkt, wenn für negative Stromrichtungen die Ausgangsspannung $U_{out2}$ der Stromrichtungsumkehrschaltung 12 High ist.

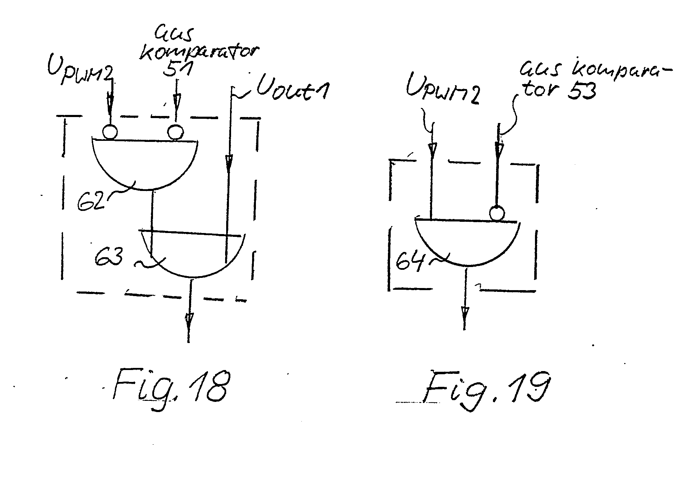

Die Ansteuerschaltung 7 in Fig. 3 für den Halbleiterschalter 1 ist in Fig. 17 dargestellt. Er besteht aus einem UND-Glied 61 mit einem invertierenden Eingang, der an dem Ausgang des Komparators 54 in Fig. 12 liegt. Der andere Eingang wird mit $U_{PWM1}$ gespeist. Analog zu der Ansteuerschaltung in Fig. 16 ist die Ansteuerschaltung 10 der Fig. 3 in Fig. 18 mit dem UND-Glied 62 mit invertierenden Eingängen sowie dem nachgeschalteten ODER-Glied 63 dargestellt. Das UND-Glied wird hier mit dem Signal $U_{PWM2}$ sowie aus dem Komparator 51 gespeist. Der eine Eingang des ODER-Glieds hingegen erhält das Signal $U_{out1}$ der Stromrichtungsumkehrschaltung und schaltet den Halbleiterschalter 4 dauernd ein, wenn das Ausgangssignal $U_{out1}$ der Stromrichtungsumkehrschaltung 12 ein Signal mit hohem Pegel abgibt. Die in Fig. 19 gezeigte Ansteuerschaltung 8 der Fig. 3 entspricht wiederum der Ansteuerschaltung gemäß Fig. 17 mit der Ausnahme, daß hier ein UND-Glied 64 mit einem invertierenden Eingang an den Ausgang des Komparators 53 angeschlossen ist, während der andere nicht invertierende Eingang mit dem Signal $U_{PWM2}$ beaufschlagt wird.

## Ansprüche

1. Schaltungsanordnung zur getakteten Ansteuerung von Halbleiterschaltern, zu denen je eine Freilaufdiode parallel liegt und die in Zweigen einer Brücke angeordnet sind, in deren Diagonalen eine ohmsch-induktive Last, insbesondere ein Gleichstrommotor, liegt, wobei während einer Bestromungsphase zwei in der Brücke diagonal gegenüberliegende Halbleiterschalter eingeschaltet sind und wobei in der Freilaufphase ein Freilaufstrom durch die Last fließt,
**dadurch gekennzeichnet,**
daß zu Beginn einer Freilaufphase nur einer (1) der beiden diagonal gegenüberliegenden Halbleiterschalter (1, 4) geöffnet wird und anschließend ein in der Brücke neben dem leitenden Halbleiterschalter (4) liegender Halbleiterschalter (3) eingeschaltet wird und daß vor Beginn einer sich daran anschließenden Bestromungsphase der in der Brücke neben dem leitenden Halbleiterschalter (4) liegende Halbleiterschalter (3) geöffnet wird, bevor der geöffnete Halbleiterschalter (1) der beiden diagonal gegenüberliegenden Halbleiterschalter (1, 4) wieder geschlossen wird.

2. Schaltungsanordnung nach Anspruch 1,
**dadurch gekennzeichnet,**
daß in der Freilaufphase der in der Brücke neben dem leitenden Halbleiterschalter (4) liegende Halbleiterschalter (3) eingeschaltet wird, wenn dessen Freilaufdiode (D3) den Freilaufstrom übernommen hat.

3. Schaltungsanordnung nach Anspruch 1 oder 2,
**gekennzeichnet durch**
eine die Spannung an der Last (5) und die Schaltzustände der Halbleiterschalter (1-4) überwachende Überwachungsschaltung (13), welche je eine Ansteuerschaltung (7-10) für jeden Halbleiterschalter steuert.

4. Schaltungsanordnung nach Anspruch 1 oder 2,
**gekennzeichnet durch**

einen Wartezeitgenerator (33) zur Erzeugung fester Wartezeiten, welcherje eine Ansteuerschaltung (7-10) für jeden Halbleiterschalter steuert.

5. Schaltungsanordnung nach Anspruch 3 oder 4,
**dadurch gekennzeichnet,**
daß die Ansteuerschaltungen durch einen Pulslängenmodulator (14) gesteuert werden.

6. Schaltungsanordnung nach einem der vorgehenden Ansprüche,
**dadurch gekennzeichnet,**
daß zur gesteuerten Stromrichtungsumkehr in der Last während einer Freilaufphase der noch eingeschaltete (4) der beiden diagonal gegenüberliegenden Halbleiterschalter (1-4) ausgeschaltet wird, während der in der Brücke neben diesem Halbleiterschalter (4) liegende Halbleiterschalter (3)eingeschaltet bleibt, und anschließend der zu letzterem Halbleiterschalter (3) diagonal gegenüberliegende Halbleiterschalter (2) eingeschaltet wird.

7. Schaltungsanordnung nach einem der Ansprüche 1-5,
**dadurch gekennzeichnet,**
daß zur gesteuerten Stromrichtungsumkehr in der Last während der Bestromungsphase zunächst derjenige (1) der beiden diagonal gegenüberliegenden Halbleiterschalter (1, 4) ausgeschaltet wird, der vor Strom richtungsumkehr getaktet geschaltet wurde, und daß anschließend der neben dem leitenden Halbleiterschalter (4) der beiden diagonal gegenüberliegenden Halbleiterschalter in der Brücke liegende Halbleiterschalter (3) geschlossen wird, worauf der noch eingeschaltete der beiden diagonal gegenüberliegenden Halbleiterschalter (1-4) ausgeschaltet wird, während der in der Brücke neben diesem Halbleiterschalter (4) liegende Halbleiterschalter (3) eingeschaltet bleibt, und anschließend der zu letzterem Halbleiterschalter (3) diagonal gegenüberliegende Halbleiterschalter (2) eingeschaltet wird.

8. Schaltungsanordnung nach den Ansprüchen 6 und 7,
**dadurch gekennzeichnet,**
daß eine Stromrichtungsumkehrschaltung (12) je eine Ansteuerschaltung für jeden Halbleiterschalter steuert.

9. Schaltungsanordnung nach einem der vorangehenden Ansprüche,
**dadurch gekennzeichnet,**
daß die Halbleiterschalter (1-4) MOSFET-Transistoren mit jeweils integrierter Freilaufdiode sind.

10. Schaltungsanordnung nach einem der Ansprüche 1 - 8,
**dadurch gekennzeichnet,**
daß die Halbleiterschalter (3, 4) jeweils zwei zusammengeschaltete NPN-Bipolartransistoren (36, 37) mit einer zusätzlichen Freilaufdiode (D3; D4) umfassen.

11. Schaltungsanordnung nach einem der Ansprüche 1 - 8,

**dadurch gekennzeichnet,**

daß zwei in der Brücke nebeneinanderliegende Halbleiterschalter (3; 4) MOSFET-Halbleiter sind und zwei weitere in der Brücke nebeneinanderliegende Halbleiterschalter (1; 2) Bipolartransistoren sind.

FIG.1

FIG. 2

Eingangssignal

Pulslängenmodulator

Stromrichtungsumkehr

Ansteuerschaltung 7

Ansteuerschaltung 8

Ansteuerschaltung 9

Ansteuerschaltung 10

Überwachungseinheit

FIG.3

Last

$\frac{1}{D1}$ $\frac{2}{D2}$ $\frac{3}{D3}$ $\frac{4}{D4}$

0 291 803

FIG.4

Eingangs-signal

Pulslängen-modulator

Stromricht-ungsumkehr

Strom-erfassung

Ansteuer-schaltung

Ansteuer-schaltung

Ansteuer-schaltung

Ansteuer-schaltung

Wartezeit-generator

Last

+U

0 291 803

FIG.5

Lagesoll-wert

Pulslängen-modulator

Stromricht-ungsumkehr

Lageistwert-erfassung

Ansteuer-schaltung

Ansteuer-schaltung

Ansteuer-schaltung

Ansteuer-schaltung

Wartezeit-generator

0 291 803

FIG.6

Fig. 7

Fig.8

Fig.9

Fig.10

Fig. 13

Fig. 14

0 291 803

Fig. 12

Fig. 11

Fig. 15

Fig. 16

Fig. 17

$U_{PWM2}$  aus komparator 51  $U_{out1}$

62

63

Fig. 18

$U_{PWM2}$  aus komparator 53

64

Fig. 19